# EUROPEAN PATENT APPLICATION

(11) **EP 4 793 002 A1**
(43) Date of publication of application: **19.08.2026**
(21) Application number: 25158409.0
(22) Date of filing: 17.02.2025
(51) Int. Cl.: B25J 21/00, B25J 21/02

(54) **FACILITY FOR DISASSEMBLING A HV-BATTERY AFTER A THERMAL DAMAGE EVENT**

(71) Applicant: SAMSUNG SDI CO., LTD., Yongin-si, Gyeonggi-do 17084 (KR)
(72) Inventor: Friedl, Thomas, 8073 Feldkirchen bei Graz (AT)
(74) Representative: Gulde & Partner

(57) **Abstract**

The present disclosure refers to a disassembling facility (1000) for disassembling HV-battery (200) after a thermal damage event. The facility (1000) includes at least one work space (10) accessible for a user. The contamination tunnel (20) is separated from the at least one work space (10) by at least one tunnel wall (30) and including a tunnel inlet (23) for entering of the HV-battery (200) and a tunnel outlet (24) for discharging the disassembled HV-battery (200). The facility (1000) a transparent member (32) at the at least one tunnel wall (30). The plurality of operating gloves (40) sealed to the at least one tunnel wall (30) so that the user can manually operate inside the contamination tunnel (20) through use of the operating gloves (40) from the at least on work space (10). A transport member (50) is provided inside the contamination tunnel (20) which supports the HV-battery (200) and is controllable to move the HV-battery (200) at least partially along the contamination tunnel (20).

## Description

### Field of the Disclosure

The present disclosure relates to a facility for disassembling a HV-battery after a thermal damage event.

### Technological Background

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may be possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The dismantling of partially or completely burnt HV (High Voltage) batteries, for example, lithium-ion batteries, is a dangerous and complex work process. Potential risk hazards are inhalation or contact with carcinogenic substances, contact with high voltages or burns to retina and cornea due to irradiated UV light. The health risks for the users are currently not sufficiently reduced. However, the disassembly of batteries is necessary in the development and in the disposal process of high-voltage batteries.

As a result of the increasing development of lithium-ion high-voltage batteries, it will become necessary to disassemble these batteries after a thermal damage event has occurred. This is not only necessary to gain knowledge in the course of battery development, but also for the safe disposal of batteries.

The disassembly process is currently either not carried out at all or usually takes place outdoors with increased risk for the person who has to perform the task. The personal protective equipment available on the market only covers parts of the hazards involved. In addition, it is becoming increasingly difficult to find suitably qualified personnel for these tasks due to heavy labor, physical aptitude, mental aptitude and extensive high-voltage training. In addition, such disassembly process should be time-efficient and convenient for the user.

### Summary of Invention

The invention is defined by the appended claims. The description that follows is subjected to this limitation. Any disclosure lying outside the scope of said claims is only intended for illustrative as well as comparative purposes.

The present disclosure relates to a facility for disassembling HV-battery after a thermal damage event. The facility includes at least one work space accessible for a user. A contamination tunnel is provided which is separated from the at least one work space by at least one tunnel wall. The contamination tunnel extends between a tunnel inlet for inserting the HV-battery and a tunnel outlet for discharging the disassembled HV-battery. The facility further includes a transparent member at the at least one tunnel wall. The facility further includes a plurality of operating gloves sealed in the at least one tunnel wall so that the user can manually operate inside the contamination tunnel through use of the operating gloves from the at least on work space. A transport member is provided inside the contamination tunnel for supporting and moving of the HV-battery. At least one controller is provided which is configured to control the transport member to move the HV-battery at least partially along the contamination tunnel.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a schematic top view of a facility for disassembling HV-battery after a thermal damage event according to an embodiment,
- FIG. 2: illustrates a schematic top view of a contamination tunnel according to an embodiment, and
- FIG. 3: illustrates a schematic side view of a facility for disassembling HV-battery after a thermal damage event according to an embodiment in direction A as indicated in Fig. 1.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

The present disclosure relates to a facility for disassembling/dismantling a HV-battery after a thermal damage event. The facility includes at least one work space accessible for a user. A contamination tunnel is provided which is sealed from the at least one work space by at least one tunnel wall. The contamination tunnel extends between a tunnel inlet for inserting the HV-battery and a tunnel outlet for discharging the at least partially disassembled HV-battery. The facility further includes a transparent member at the at least one tunnel wall. The facility further includes a plurality of operating gloves sealed in the at least one tunnel wall so that the user can manually operate inside the contamination tunnel through use of the operating gloves from the at least on work space. A transport member is provided inside the contamination tunnel for supporting and moving the HV-battery. At least one controller is provided which is configured to control the transport member to move the HV-battery at least partially along the contamination tunnel.

A thermal damage event may include a burn or at least a partial burn and/or a case of damage as a result of a thermal propagation event. The facility may be provided by a container, a room or any device/facility that allows users/workers to perform the disassembling work tasks. The facility may include an outer periphery formed by walls, for example, container walls. The periphery may be formed by a container or a building. The safe dismantling facility essentially may include a closed room (building, container, etc.) which is equipped according to the given requirements. The structure may be modular and can be extended according to requirements and local regulations and laws.

The at least one controller may be provided to control the motion of the transport member either automatically or in response to control inputs. HV-battery (high voltage battery) may include battery cells, battery modules or battery packs but is not restricted thereto. In particular, batteries including Lithium-ion batteries are included. The transparent member may include a glass material. The operating gloves or working gloves may include a material to protect against high voltages, acids, alkalis and/or dust. The operating gloves may be provided differently for different work zones along the contamination tunnel to be adapted for particular disassembling tasks. The contamination tunnel may also be referred to as tunnel or tunnel for disassembling contaminated HV-batteries. A HV-battery may be a battery designated to operate from 50V or more or from 100V. A least partially along the contamination tunnel may include that the HV-battery is moved the entire length between tunnel inlet and tunnel outlets. The HV-battery may be entirely disassembled at the end or partly disassembled.

The transport member allows that the HV-battery can be stepwise disassembled along the contamination channel while the user/worker can remain in the safe environment that is separated/sealed from the contamination channel where the HV-battery are moved along the contamination channel. Further, due to the transport member, a further advantage is also the reduction of time in disassembling so that an output increases. The movement of the HV-battery caused by the transport member allows to provide a safe work environment in which multiple users/workers can sequentially and safely operate through operating gloves and suitable working tools to disassemble the HV-battery in the dismantling process. Thus, the disassembly process is safe and time-effective. In addition, the risk of touching of hazardous voltages for the workers is reduced and protection from possible deflagrations or even explosions during the disassembly process is increased. Thus, the facility provides a safe, cheap and environmentally friendly solution for the dismantling of high-voltage lithium-ion batteries. The user does not even have to wear personal protective equipment for disassembling the HV-battery so that user convenience is enhanced. The costs of serious accidents at work and possible long-term consequences can be reduced. A work space may be in other words a work area.

According to one embodiment, the transport member may include a conveyor belt and/or a plurality of transport rolls which are configured to move the HV-battery at least partially along the contamination tunnel. The at least one controller can be used to control the longitudinal movement of the conveyor belt or the rotation motion of the transport rolls to move the HV-battery along the tunnel path. The conveyor belt is an efficient way to provide the transport of the HV-battery along the work zones.

According to another embodiment, the at least one controller may be configured to control the transport member so that the movement of the HV-battery is interrupted at designated working zones along the contamination tunnel. In this way, a time-efficient sequential disassembly process is provided so that different tasks in the work flow can be performed in the intermediate interrupt time according to a suitable work order.

According to another embodiment, the facility may include a lifting member configured to adjust a height position of the transport member. This allows to optimize the individual dismantling tasks which need to be performed by the worker. The lifting member may be adjusted mechanically, hydraulically and/or by receiving a control command by the user.

According to another embodiment, the transparent member includes a safety glass. Thus, the at least one work space and the contamination tunnel are separated by sealed glass partitions. The safety glass may be safety glazing, for example, a laminated safety glass (LSG or VSG) with splinter protection. The safety glass has an advantage in providing protection for the worker form deflagration or explosion.

According to another embodiment, the tunnel walls and/or safety glass walls may be removably installed. Thus, the tunnel walls can be divided and/or easily removed for maintenance and cleaning work. The tunnel walls and/or safety glass walls may form a plurality of tunnel wall segments.

According to another embodiment, at least one contact sensor may be provided which is configured to cause an operation stop of the facility and/or a stop of the movement of the transport member in response to sensing that at least one removable tunnel wall segment is not contacting with a neighboring tunnel wall segment. A contact failure signal may be transmitted to the at least one controller to cause at least one among the above actions. The least one contact sensor may be contact switch. Thus, the removably installed tunnel wall segments are monitored by electronic contact switches. Normal operation of the system may then be only possible if all tunnel wall segments are correctly positioned and a release signal from the central control system, i.e., the at least one controller, is present. This ensures that safe operating conditions are fulfilled also when maintenance of the contamination tunnel and tunnel wall segment is performed or has been performed.

According to another embodiment, the at least one tunnel wall includes an auto-darkening filter coating on at least one among an inner or outer surface of the transparent member. The auto-darkening filter coating may be coated on the safety glass. This auto-darkening filter protects a user from UV rays in the event of an electric arc event caused in the HV-battery during disassembly. The auto-darkening filter darkens automatically a few milliseconds after the arc is ignited. Therefore, burns to retina and cornea due to UV light can be effectively prevented and the safety for the user increased.

According to another embodiment, the facility includes a gas extraction system including a ventilator for extracting gas from an interior of the contamination tunnel. In particular, dust or other toxic gases can be evacuated from the interior. A filter, for example type H14, may be disposed in the extraction channel to collect solid portions of the extracted gas to be safely removed before eventually releasing the filtered gas to the environment. The filter has an advantage that leakage of heavy metals into the environment (air) and leakage of heavy metals into the environment (water) is prevented. The filter can be configured to filter the dust from the polluted air. The gas extraction system ensures that any dust occurring in this zone is safely removed and also filtered before exiting into an environment.

According to another embodiment, the at least one controller is configured to control the ventilation system to provide a pressure difference ΔP = P1 - P2 between a first air pressure P1 in an interior of the contamination tunnel and a second air pressure P2 in the at least one work space so that the pressure difference ΔP is negative. Thus, the at least one controller can control the extraction system, i.e., the ventilator (or fan), in the activated state such that there is a slight negative pressure in the contaminated tunnel compared to the safe working space. This ensures that escaping particles cannot penetrate into the safe area, i.e., the work space as the negative pressure acts as a pressure barrier for leakage protection. Thus, contamination in the working space is additionally prevented. In particular, the gas extraction system can be controlled to maintain a negative pressure in the contamination tunnel. The gas extraction system may run continuously. In addition, an operation speed may be enhanced in response to a detected hazardous event. The second pressure P2 may be norm pressure.

According to another embodiment, the facility includes a pressure detection unit, in other words a pressure difference detection unit, configured to measure the pressure difference ΔP = P1 - P2 between a first air pressure P1 in the interior of the contamination tunnel and a second air pressure P2 in the at least one work space and output an information (e.g. an alarm) on overpressure in case that the pressure difference ΔP rises above a threshold pressure value. Thus, the user can be warned in early manner that the safety pressure difference preventing contamination in the working space is not anymore provided.

According to another embodiment, a gas inlet configured to inject a gas into an interior of the contamination tunnel. The gas inlet can be controlled by the at least one controller. The gas to be injected may be air, for example, fresh air or nitrogen N₂. The injection of gas allows to change the composition within the contamination tunnel. For example, due to adding of gases (fresh air or nitrogen N₂) concentration of explosive gases like H₂ may remain below a threshold concentration, e.g. an ignition concentration due to an event of electrical discharge or even an explosion concentration. Thus, the risk of explosions or deflagration may be reduced by changing the local atmosphere in the contamination tunnel. The gas inlet may be controlled to operate synchronically with the gas extraction system in an embodiment to thereby optimize the conditions in the contamination tunnel.

According to another embodiment, the facility includes a rail member mounted in the contamination tunnel and extending along the contamination tunnel to which a working tool is attachable and movable along the rail member. Thus, a working tool can be shifted along the contamination tunnel and the same working tool can be used in various working zones by different users.

According to another embodiment, the rail member includes a C-profile supporting a slider enclosed in the C-profile, wherein the slider is movable along the rail member and includes a coupling member for attaching a working tool. A stable and easy to handle configuration to provide a sliding movement for the working tools is provided in this manner. In addition, a balancer may be interconnected between the slider and the working tool. The balancer includes a rope which can be pulled to pull the attached working tool to the user and, after usage, the working tool may reset back due to stored reset forces (elastic forces) in the rope. Thus, an efficient system is provided to work with working tools that are accessible to each of the users.

According to another embodiment, the facility may include an explosion flap formed in a top portion of the contamination tunnel and configured to automatically open in response to an overpressure in the contamination tunnel above a pressure threshold. Thus, in a damage event where pressure rises rapidly, the pressure is prevented to increase beyond the pressure threshold. Thus, the explosion flap may set a maximum pressure in the contamination tunnel.

According to another embodiment, the facility may include a plurality of working zones along the contamination tunnel, wherein each working zone includes a set of operating gloves sealed with (i.e., connected in sealed manner) the at least one tunnel wall to manually operate inside the contamination tunnel at the corresponding working zone. The operating gloves may be different for each working zone depending on the particular work task at the corresponding working zone. Thus, the facility allows for time-efficient disassembly to increase the output.

According to another embodiment, an explosion flap and/or a gas inlet may be formed in a first working zone located at the tunnel inlet. The location has an advantage in that the likelihood for an explosion, deflagration or other critical thermal events is in the initial working process, i.e., in the first working zone. Thus, by locating the explosion flap and/or a gas inlet in the first working zone ensures that the local atmosphere in this critical area is optimized by at least locally changing the gas composition. In addition, the response time of the explosion flap is reduced since the highest likelihood of an explosion, deflagration other critical event is in the first working zone.

According to another embodiment, at least one emergency stop switch is provided, inside the contamination tunnel and/or in the at least one work space, which is configured to, in response to an activation by the user, stop the movement of the transport member. Therefore, in an emergency, the movement of the HV-battery along the contamination tunnel is prevented. This allows the users to quickly react on an emergency situation to increase safety in operation. In case the user is currently operating, an emergency stop switch inside the contamination tunnel may be provided so to allow fast response times. As well, an emergency switch may be provided inside the at least one work space to also activate the switch when not currently using the operating gloves. In addition, the event of activation of the emergency stop switch may operate the extraction system, i.e. the ventilator thereof, at a full level. In addition, acoustic and/or visual alarms may be activated in response to pressing of the emergency stop switch. When returning to normal operation, all emergency stop switches must be unlocked. In addition, there must be no alarm from another sensor (fire detector, gas sensor, pressure sensor etc.) on the central control system. Normal operation may be only possible again when an operator, i.e. a user, presses a start button.

### Specific Embodiments

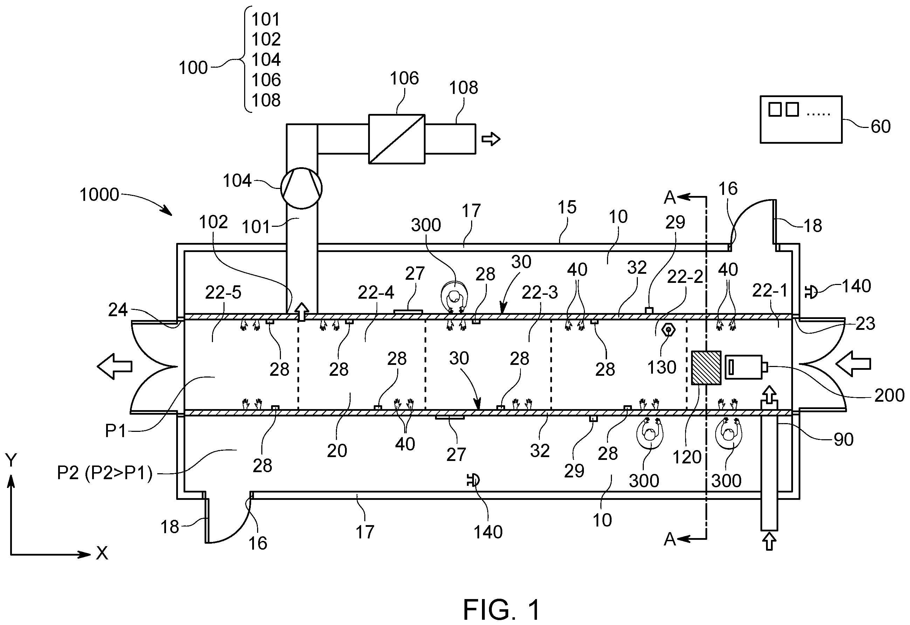

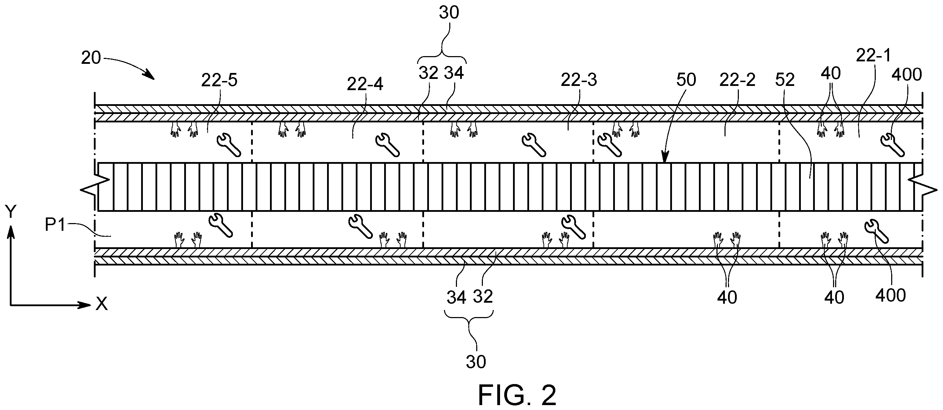

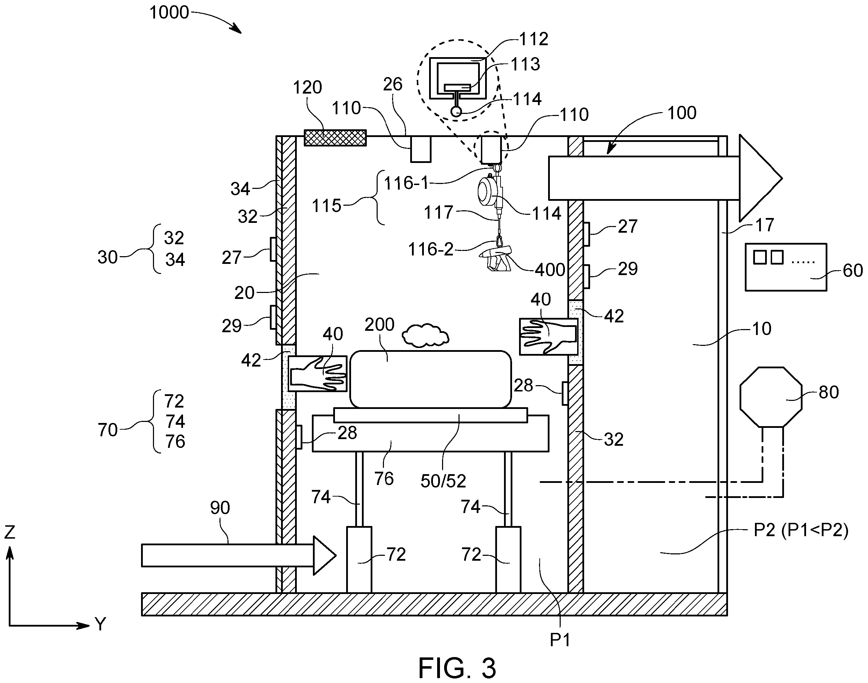

FIG. 1 is a top view illustrating a facility 1000 for disassembling HV-battery 200 after a thermal damage event. FIG. 2 illustrates a schematic top view of a contamination tunnel according to an embodiment, and FIG. 3 illustrates a schematic side view of the facility for disassembling HV-battery after a thermal damage event according to an embodiment. In the following it will be referred to any of the FIGs. 1 - 3 depending on the features described.

The facility 1000 described in the following is for disassembling/dismantling HV-battery 200, e.g. battery cells, battery modules or battery packs after a thermal damage event has occurred for the HV-battery 200. Such thermal damage event may include a burn or at least a partial burn and/or a case of damage as a result of an event of thermal propagation. The dismantling process of such HV-batteries 200 includes various safety hazards for a user 300, i.e., the worker.

As illustrated in FIG. 1, the facility 1000 may be provided in a container 15 which includes outer (confining) walls 17 forming an individual unit with a defined boundary to the facility 1000. However, in other embodiments, the facility 1000 may be integrated as a dismantling room in a larger system like a building. Therefore, the facility 1000 can be integrated in a larger structural entity or may be provided as a separate unit depending on the particular use case.

The facility 1000 according to the disclosure includes at least one work space 10. The work space 10 is accessible for the user 300. This means that the user 300 can enter the work space 10 and perform a dedicated work task related to the disassembling of the HV-battery 200. The work space 10, as will be described below, provides a safe/clean area for the user 300 to perform the dedicated work task. In the present case, the work space 10 includes an entrance 16 including a door 18 to enter the work space 10. As can be seen in FIG. 1, two such work spaces 10 are provided in this embodiment that are separated from each other while each work space 10 includes a corresponding entrance 16.

The facility 1000 includes a contamination tunnel 20 in which the HV-battery 200 is disposed for the disassembling process. The contamination tunnel 20 is separated, i.e. sealed, from the at least one work space 10 by at least one tunnel wall 30. Thus, the sealed tunnel walls 30 help to provide a safe/clean work area for the user 300 in the work space 10. This allows to perform dedicated work tasks from both sides.

The contamination tunnel 20 extends between a tunnel inlet 23 for inserting/entering the HV-battery 200 and a tunnel outlet 24 for discharging the disassembled HV-battery 200. At the tunnel outlet 24, at least a part of the disassembling process is completed by one or multiple users 300 on a movement path connecting the tunnel inlet 23 and said tunnel outlet 24. The HV-battery 200 may be inserted at the tunnel inlet 23.

The at least one tunnel wall 30 includes a transparent member 32. The transparent member 32 allows the user 300 being in the work space 10 to see through the least one tunnel wall 30 into the contamination tunnel 20 at least at dedicated positions along the contamination tunnel 20 to performing a dedicated work task, e.g., a particular disassembling step for the HV-battery 200.

The transparent member 32 may include a safety glass. The safety glass may be a safety glazing, e.g. a laminated safety glass (LSG or VSG). The laminated safety glass includes several layers of glass with one or more thin polymer interlayers therebetween. This prevents the glass from breaking into large sharp pieces. Thus, the safety glass including provides splinter protection in case of explosion or deflagrations during the disassembling process so that a risk of breakage and harm to the user 300 can be reduced.

According to an example, the at least one tunnel wall 30 includes an auto-darkening filter coating 34 on at least one among the inner or outer surface of the transparent member 32. In the example as shown in FIGS. 2 and 3, the auto-darkening filter coating 34 is formed on an outer surface of the transparent member 32, i.e. for example, on the safety glass. The auto-darkening filter coting 34 darkens automatically a few milliseconds after the arc is formed so that the user 300 is well protected from UV rays caused by the electric arc. Thus, the at least one tunnel wall 30 according to the above particular embodiments increases protection of the users 300 in the work space 10 and preventing their eyes, i.e. retina and/or cornea, from harm.

The facility 1000 includes a plurality of operating gloves 40 for the user 300. The operating gloves 40 are sealed, i.e. coupled in a sealed manner, with the at least one tunnel wall 30. A sealing member 42 may surround the operating gloves 40 to provide the sealing property. This is shown in side view of corresponding FIG. 3. Therefore, the user 300 can manually operate/work inside the contamination tunnel 20 for performing a dedicated disassembling tasks through use of the operating gloves 40 from the safe at least on work space 10.

The facility 1000 further includes a movable transport member 50 as indicated in FIGS. 2 and 3. The transport member 50 is disposed inside the contamination tunnel 20 for supporting and moving the HV-battery 200.

In addition, the facility 1000 includes at least one controller 60. The at least one controller 60 may be a central controller to control operation of the facility 1000 or may include a plurality of specific controllers to control parts or particular devices of the facility 1000.

The least one controller 60 is configured to control the transport member 50 to move the HV-battery 200 at least partially along the contamination tunnel 20. A motor (here not shown) and actuators may be provided to physical cause the motion. For example, the movable transport member 50 may be controlled to move the HV-battery 200 from the tunnel inlet 23 to the tunnel outlet 24. The transport member 50 allows that the HV-battery 200 can be stepwise disassembled along the contamination tunnel 20 while the user/worker 300 are operating in safe environment that is separated from the contamination channel 20. In addition, due to the transport member 50 and its transport movement, disassembling time is reduced so the output increases. Thus, the movement of the HV-battery 200 caused by the transport member 50 allows to provide a safe work environment in which multiple users/workers can sequentially and safely work with the operating gloves 40 and suitable working tools 400 to disassemble the HV-battery 200 in the dismantling process. Thus, the disassembly process is safe and time-effective.

As indicated in FIG. 2, the transport member 50 may be a conveyor belt 52 which is configured to move the HV-battery 200 at least partially along the contamination tunnel 20 and controlled by the at least one controller 60. In an example, the conveyor belt 52 extends from the tunnel inlet 23 to the tunnel outlet 24 and the at least one controller 60 may control the speed of the conveyor belt 52. For example, the speed control may include movement interruptions at designated positions along the movement paths so that particular dismantling steps can be performed while the movement is interrupted.

Alternatively or in combination, the transport member 50 includes a plurality of transport rolls (here not shown). The transport rolls may be more robust for heavy HV-batteries 200 to be transported along the contamination tunnel 20. The at least one controller 60 may control the transport rolls so that the HV-battery 200 is moved along the movement path of the contamination tunnel 20.

The at least one controller 60 may be configured to move the transport member 50 so that the movement of the HV-battery 200 is interrupted at working zones 22-1, ..., 22-5 along the contamination tunnel 20. Thus, particular dismantling steps can be performed by the user 300 at such working zones 22-1, ..., 22-5.

As shown in FIG. 1, a plurality of working zones 22-1, ..., 22-5 may be provided along the contamination tunnel 20. Each working zone 22-1, ..., 22-5 includes a set, i.e., a pair for example, of operating gloves 40 sealed with the at least one tunnel wall 30 as for example shown in FIGS. 1 and 2. Thus, at each of the working zones 22-1, ..., 22-5, a user 300 can manually operate/work inside the contamination tunnel 20 at the corresponding working zone 22-1, ..., 22-5 to fulfill a particular dismantling task.

For example, for each working zone 22-1, ..., 22-5 a specific working tool 400 may be disposed at a location corresponding to the respective working zone 22-1, ..., 22-5 so that a designated task at the corresponding location may be fulfilled. However, the invention is not restricted thereto as will be described with respect to FIG. 3.

As indicated in FIG. 1, the facility 1000 includes a gas inlet 90. The gas inlet 90 is configured to inject a gas into an interior of the contamination tunnel 20. The gas may be, for example, fresh air or nitrogen N₂. The control of the gas inlet 90 may be performed by the at least one controller 60, for example by a central controller of the facility 1000 or a specific controller. The influx of the gases allows to change the composition of the gas atmosphere in the contamination tunnel 20. For example, the concentration of explosive gases like H₂ or other explosive gases may remain below certain threshold concentrations. This may be achieved by the at least one controller 60, e.g., controlling an amount of gas flowing into the contamination tunnel 20. For, example, the at least one controller 60 may be configured to control the concentration of explosive gases like H₂ to be below an ignition concentration due to an event of electrical discharge or even an explosion concentration. The controllable gas inlet 90 during operation of the facility 1000. A gas sensor 130 may be provided to measure the concentration of the gases and/or smoke. In addition, the at least one controller 60 may increase the amount of gas influx in response to detecting a hazardous concentration in the contamination tunnel 20 by the gas sensor 130.

In addition, the gas sensor 130 provided to measure the gas composition in the contamination tunnel 20, which may be permanently performed. This may allow to detect an upcoming of a thermal event inside the contamination tunnel 20 and can be outputted to the users 300 as an alarm. Further, a fire alarm 140, see FIG. 1, may be provided to warn the users 300 in case of fire detection.

As indicated in FIGS. 1 and 3, the facility 1000 may include a gas extraction system 100. The gas extraction system 100 includes a ventilator 104 for extracting gas from an interior of the contamination tunnel 20. Thus, smoke and toxic gases can be evacuated from the contamination tunnel 20 through the gas extraction system 100 to reduce contamination level therein so that the risk of leaking of smoke or toxic gases through the at least one tunnel wall 30 is reduced. The gas extraction system 100 may include an extraction opening 102 in a tunnel wall 30. An extraction channel 101 may be formed starting at the extraction opening 102 and leading towards an extraction outlet 108. The ventilator 104 may be positioned in the extraction channel 101 to withdraw gases from the contamination tunnel 20 into the extraction channel 101. In addition, a filter 106 may be provided and disposed in the extraction channel 101 before the extraction outlet 108. Thus, before discharging the gas to the outside (through the extraction outlet), toxic particles and dust may be separated and held in the filter 106 so that a cleaner/safer output of air may be achieved.

The at least one controller 60 may operate the ventilator 104 so that gas medium flows out of the contamination tunnel 20. The operation may be performed continuously. In embodiments, the at least one controller 60 may increase the operation speed of the ventilator 104 to increase the amount of gas outflux in case an event indicative of a hazardous situation is detected. For example, a gas sensor 130 may detect smoke, an increase in H₂ concentration or a pressure sensor may detect overpressure in the contamination tunnel 20. In embodiments, the ventilator 104 and the gas inlet 90 may be operated synchronically. This may optimize the effect of atmospheric cleaning in the contamination tunnel 20 to provide safer operating conditions.

The at least one controller 60 may be configured to control the ventilator 104 to provide a pressure difference ΔP = P1 - P2 between a first air pressure P1 in the interior of the contamination tunnel 20 and a second air pressure P2 in the at least one work space 10 so that the pressure difference ΔP is negative (i.e.: P2>P1). The second pressure P2 may generally be norm pressure in the work space. For example, the at least one controller 60 may maintain a minimum pressure difference through control of the ventilator 104. Due to the pressure difference, leakage of smoke or toxic gases penetrating into the at least one work space 10 is reduced due to the additional pressure barrier. Thus, safety from hazardous gases and smoke for the users 300 in the at least one work space 10 is enhanced due to the pressure barrier.

A pressure (difference) detection unit 80, see in particular FIG. 3, is configured to measure the pressure difference ΔP = P1 - P2 between the first air pressure P1 in the interior of the contamination tunnel 20 and the second air pressure P2 in the at least one work space 10. When the pressure difference ΔP rises above a threshold pressure value (for example 0, i.e., when P1=P2 or a threshold where P2<P1), an information as for example an alarm may be outputted to the user 300. Thus, the users 300 are informed that the negative pressure contamination safety conditions (pressure barrier) are not fulfilled anymore so that the additional safety is provided to the users.

As illustrated in FIG. 1 and 3, the facility 1000 may further include an explosion flap 120. The explosion flap 120 formed in a top portion 26, e.g. a ceiling portion, as shown in FIG. 3 of the contamination tunnel 20. The explosion flap 120 is configured to automatically open in response to an overpressure in the contamination tunnel 20 above a pressure threshold. The pressure threshold may be adjustable by properties of the explosion flap 120. The explosion flap 120 ensures that pressure in the contamination tunnel 20 is limited and overpressure released due to the opening of the explosion flap 120.

As can be seen for example in FIGS. 1 and 3, the explosion flap 120 and the gas inlet 90 may be located in a first working zone 22-1 located at the tunnel inlet 23. A likelihood for an explosion or damage event is highest in the initial working process, i.e., in the first working zone 22-1. Thus, by locating the explosion flap 120 and/or a gas inlet 90 in the first working zone 22-1 ensures that the local gas composition is optimized as a measure to prevent critical conditions. In addition, the response time of the explosion flap 120 to open is reduced in case a damage event has occurred in the initial first working zone 22-1.

As indicated in FIG. 1 and FIG. 3, at least one emergency stop switch 27/28 is provided. The emergency stop switch 27/28 may be provided inside the contamination tunnel 20 and/or in the at least one work space 10, see FIG. for an example. The least one emergency stop switch 27/28 is configured to, in response to an activation by the user, stop the movement of the transport member 50. Therefore, in an emergency, the movement of the HV-battery 200 along the contamination tunnel 20 may be interrupted by the user 300. This allows the users to quickly react on an emergency situation to increase operation safety. In case the user is currently operating, an emergency stop switch 28 inside the contamination tunnel 20 may be provided so to allow fast response times. As well, an emergency switch 28 may be provided inside the at least one work space 10 to activate the switch when the user 300 is not currently using the operating gloves. In addition, the event of activation of the emergency stop switch 27/28 may operate the gas extraction system 100, i.e. the ventilator 104 thereof, at a full level to optimize an emergency response. In addition, acoustic and/or visual alarms may be activated in response to pressing of the emergency stop switch 27/28. When returning to normal operation, all emergency stop switches should unlocked no alarm from another sensor (fire detector, gas sensor, pressure sensor etc.) operating.

The tunnel walls 30 and/or safety glass walls may be removably installed. The tunnel walls 30 may include plurality of tunnel wall segments (not shown in FIG. 1). Thus, the tunnel walls 30 can be divided and/or easily removed for maintenance and cleaning work. As indicated in FIG. 1 and FIG. 3, at least one contact sensor 29 may be provided. The one contact sensor 29 may be disposed on the tunnel wall 30. The at least one contact sensor 29 is configured to cause an operation stop of the facility 1000 and/or a stop of the movement of the transport member 50 in response to sensing that at least one removable tunnel wall segment is not contacting with a neighboring tunnel wall segment. Then, a contact failure signal may be transmitted to the at least one controller 60 to cause an operation stop of the facility 1000, i.e. system or at least the transport member 50. Thus, the removably installed tunnel wall segments are monitored by electronic contact switches 29. This ensures that safe operating conditions are fulfilled also when maintenance of the contamination tunnel and tunnel wall segment is performed or has been performed.

As shown in FIG. 3, a lifting member 70 (or lifter) is provided. The lifting member 70 may be configured to adjust a height position of the transport member 50. Thus, operation position for the user 300 can be optimally adjusted for the dismantling task of the HV-battery 200. The lifting operation may be performed along the entire length of the contamination tunnel 20 or locally for each working zone 22-1, ..., 22-5. The lifting member 70 may include a fixed member 72 and a movable member 74 that is partially inserted in the fixed member 72 and movable in a height direction with respect to the fixed member 72. In addition, a support member 76 may be provided on the top of the movable member 74 so to be movable in height direction together with the movable member 74. The HV-battery 200 may be supported on the support member 76. A lifting motor (not shown) may be provided to allow the motion in height direction to adjust the height.

Further, as shown in FIG. 3, a rail member 110 is mounted in the contamination tunnel 20. The rail member 110 may extend along the contamination tunnel 20. For example, the rail member 110 may extend to pass the plurality of working zones 22-1, ..., 22-5. The working tool 400 is movably attachable to the rail member 110. Thus, every user 300 can use all working tools 400 since they can be moved along the rail member 110 through the contamination tunnel 20.

In an example embodiment, the rail member 110 includes a C-profile 112 supporting a slider 113 enclosed in the C-profile 112. The slider 113 is movable along the rail member 110 and includes a coupling member 114 for attaching a working tool 400. A stable and easy to handle configuration to provide a sliding movement for the working tools is provided in this manner. The working tool 400 may be directly connected with the slider 113. In an example, a balancer 115 may be interconnected between the slider 113 and the working tool 400. The balancer 115 may include a coupling member 116-1 to couple to the coupling member 114 of the slider 113 and a coupling member 116-2 which can be coupled to the working tools 400. The balancer 115 may include a pullable rope 117 which can be pulled to pull the attached working tool 400 to the user and, after usage, the working tool 400 may reset back due to stored reset forces (elastic forces) in the rope 117. Therefore, a convenient and efficient system is provided to work with the working tools 400 which can be used by all users/workers 300.

In summary, a facility 1000 for disassembling HV-battery 200 after a thermal damage event is provided which reduces various hazards for the users 300 during the dismantling process while allowing to efficiently perform the disassembling work task for a HV-battery 200.

### Reference signs

- 1000: disassembling facility/device/room

- 10: work space
- 15: container
- 16: entrance
- 17: walls
- 18: door

- 20: contamination tunnel
- 22-1, ..., 22-5: working zone
- 23: tunnel inlet
- 24: tunnel outlet
- 26: top portion
- 27/28: emergency stop switch
- 29: contact sensor/switch

- 30: tunnel wall
- 32: transparent member
- 34: auto-darkening filter coating

- 40: operating/working glove
- 42: sealing member

- 50: transport member
- 52: conveyor belt

- 60: controller

- 70: lifting member
- 72: fixed member
- 74: movable member
- 76: support member

- 80: pressure (difference) detection unit

- 90: gas inlet

- 100: gas extraction system
- 101: extraction channel
- 102: extraction opening
- 104: ventilator
- 106: filter
- 108: extraction outlet

- 110: rail member
- 112: C-profile
- 113: slider
- 114: coupling member
- 115: balancer
- 116-1: coupling member
- 116-2: coupling member
- 117: rope

- 120: explosion flap

- 130: gas sensor

- 140: fire alarm

- 200: HV-battery
- 300: user
- 400: working tool

## Claims

1. A facility (1000) for disassembling HV-battery (200) after a thermal damage event, comprising:
at least one work space (10) accessible for a user;
a contamination tunnel (20) sealed from the at least one work space (10) by at least one tunnel wall (30) and comprising a tunnel inlet (23) for entering of the HV-battery (200) and a tunnel outlet (24) for discharging the at least partially disassembled HV-battery (200);
a transparent member (32) at the at least one tunnel wall (30);
a plurality of operating gloves (40) sealed to the at least one tunnel wall (30) so that the user can manually operate inside the contamination tunnel (20) through use of the operating gloves (40) from the at least on work space (10);
a transport member (50) inside the contamination tunnel (20) for supporting and moving of the HV-battery (200); and
at least one controller (60) configured to control the transport member (50) to move the HV-battery (200) at least partially along the contamination tunnel (20).

2. The facility (1000) as claimed in claim 1, wherein the transport member (50) comprises a conveyor belt (52) and/or a plurality of transport rolls.

3. The facility (1000) as claimed in any one of the preceding claims, wherein the at least one controller (60) is configured to control the transport member (50) so that the movement of the HV-battery (200) is interrupted at designated working zones (22-1, ..., 22-5) along the contamination tunnel (20).

4. The facility (1000) as claimed in any one of the preceding claims, comprising a lifting member (70) configured to adjust a height position of the transport member (50).

5. The facility (1000) as claimed in any one of the preceding claims, wherein the transparent member (32) comprises a safety glass.

6. The facility (1000) as claimed in any one of the preceding claims, wherein the at least one tunnel wall (30) comprises an auto-darkening filter coating (34) on at least one among the inner or outer surface of the transparent member (32).

7. The facility (1000) as claimed in any one of the preceding claims, comprising a gas extraction system (100) comprising a ventilator (104) configured to extract gas from an interior of the contamination tunnel (20).

8. The facility (1000) as claimed in any one of the preceding claims, the at least one controller (60) is configured to control the ventilator (104) to provide a pressure difference ΔP = P1 - P2 between a first air pressure P1 in an interior of the contamination tunnel (20) and a second air pressure P2 in the at least one work space (10) so that the pressure difference ΔP is negative.

9. The facility (1000) as claimed in any one of the claims, a pressure detection unit (80) to measure the pressure difference ΔP = P1 - P2 between a first air pressure P1 in the interior of the contamination tunnel (20) and a second air pressure P2 in the at least one work space (10) and output an information on overpressure in case that the pressure difference ΔP rises above a threshold pressure value.

10. The facility (1000) as claimed in any one of the preceding claims, a gas inlet (90) configured to inject a gas into an interior of the contamination tunnel (20).

11. The facility (1000) as claimed in any one of the preceding claims, comprising a rail member (110) mounted in the contamination tunnel (20) and extending along the contamination tunnel (20) to which a working tool (400) is movably attachable along the rail member (110).

12. The facility (1000) as claimed in claim 11, wherein the rail member (110) comprises a C-profile (112) supporting a slider (113) enclosed in the C-profile (112), wherein the slider (113) is movable along the rail member (110) and comprises a coupling member (114) for attaching a working tool (400).

13. The facility (1000) as claimed in any one of the preceding claims, comprising an explosion flap (120) formed in a top portion (26) of the contamination tunnel (20) and configured to automatically open in response to an overpressure in the contamination tunnel (20) above a pressure threshold.

14. The facility (1000) as claimed in any one of the preceding claims, comprising a plurality of working zones (22-1, ..., 22-5) along the contamination tunnel (20), wherein each working zone (22-1, ..., 22-5) comprises a set of operating gloves (40) sealed to the at least one tunnel wall (30) to manually operate inside the contamination tunnel (20) at the corresponding working zone (22-1, ..., 22-5).

15. The facility (1000) as claimed in claim 14, wherein an explosion flap (120) and/or a gas inlet (90) is formed in a first working zone (22-1) located at the tunnel inlet (23).
